# EUROPEAN PATENT APPLICATION

(11) **EP 4 671 997 A1**
(43) Date of publication of application: **31.12.2025**
(21) Application number: 25181602.1
(22) Date of filing: 09.06.2025
(51) Int. Cl.: G06F 11/20

(54) **HARDWARE-BASED FAILURE RECOVERY ENGINE IN AN ARTIFICIAL INTELLIGENCE BACKEND NETWORK SYSTEM**

(30) Priority: 14.06.2024 US 202418744190
(71) Applicant: Microsoft Technology Licensing, LLC, Redmond, WA 98052 (US)
(72) Inventor: RANJAN, Prashant, Redmond, 98052 (US)
(74) Representative: CMS Cameron McKenna Nabarro Olswang LLP

(57) **Abstract**

Methods, systems, and devices for providing hardware-based failure recovery management using a hardware-based failure recovery management engine of an artificial intelligence (AI) backend network system are described. Hardware-based failure recovery management includes hardware-based techniques associated with AI hardware (e.g., an AI accelerator or AI System on Chip "SoC") where the techniques and mechanisms are employed to address malfunctions or breakdowns in components that facilitate the connectivity and communication between AI hardware and other components. The hardware-based failure recovery management engine supports detecting, mitigating, and recovering from failures in the ports and links in AI hardware. In particular, in operation, the hardware-based failure recovery management engine supports disabling a port of a plurality of ports in an ANC in AI hardware. And further supports generating an updated bandwidth distribution configuration for distributing workloads across a plurality of ANCs including the ANC associated with the disabled port and the remaining operational ports.

## Description

### BACKGROUND OF THE INVENTION

Users rely on electronic devices (e.g., computing devices with applications and services) to perform different types of tasks. Computing systems use artificial intelligence (AI) to enhance functionality, efficiency, and capabilities across numerous applications and services. Computing systems use AI to automate tasks, analyze data, personalize user experiences, and enable advance functionality across various domains. Computing systems may be integrated with AI accelerators or AI System on Chip (SoCs) that provide necessary specialized hardware to handle demanding computations of AI tasks efficiently. For example, Graphics Processing Units (GPUs), Tensor Processing Units (TPUs), Field-Programmable Gate Arrays (FPGAs), Application-Specific Integrated Circuits (ASICs), Neural Processing Units (NPUs) can be provided as AI hardware to speed up specific computations (e.g., processing large datasets and complex algorithms used in AI and machine learning) to enhance overall performance and efficiency of computing systems.

### SUMMARY OF THE INVENTION

Various aspects of the technology described herein are generally directed to systems, methods, and devices for, among other things, providing hardware-based failure recovery management using a hardware-based failure recovery management engine of an artificial intelligence (AI) backend network system. Hardware-based failure recovery management can refer to hardware-based techniques associated with AI hardware (e.g., an AI accelerator or AI System on Chip "SoC"), where the techniques and mechanisms are employed to address malfunctions or breakdowns in components that facilitate the connectivity and communication between AI hardware and other components. The AI hardware can include a Network Controller Processor (NCP) that manages communication operations of the AI hardware, an AI Network-Interface Controller (ANC) that is a multi-port controller, an ANC sync that is a composite connection of multiple ANCs that operate together, and a Composite Connection Processor (CCP) that manages the ANC sync. The hardware-based failure recovery management engine supports detecting, mitigating, and recovering from failures in the ports and links in AI hardware. In particular, the hardware-based failure recovery management engine supports disabling a port of a plurality of ports in an ANC in AI hardware, and generating an updated bandwidth distribution configuration for distributing workloads across a plurality of ANCs including the ANC associated with the disabled port and the remaining operational ports.

AI supercomputers operate based on specialized AI accelerators and AI SoCs (collectively "AI hardware"), which are AI hardware components engineered specifically for accelerating AI workloads. The AI hardware facilitate the rapid execution of complex neural network computations, thereby enhancing the performance and efficiency of AI tasks. An AI backend network system can refer to an interconnected fabric that binds AI hardware into a cohesive computation unit. The AI backend network system can have a network architecture designed to accommodate massive data transfer requirement inherent in AI workloads, while simultaneously ensuring low latency and high bandwidth.

Conventional AI backend network systems are not configured with logic and infrastructure for adequate and efficient failure recovery management for AI hardware. The scale and complexity of these AI backend network systems amplify the likelihood of component failures, ranging from individual AI accelerators or AI SoCs to the cables and switches that comprise the AI backend network system. The intricate nature of these failures necessitates manual intervention for diagnosis and repair, which not only disrupts ongoing operations but also introduces significant overhead in terms of operational expenses and system downtime. As such, a failure recovery management solution can be developed to ensure continuous operation, performance optimization, fault tolerance, operational efficiency, and customer satisfaction.

A technical solution - to the limitations of conventional failure recovery management systems - can include providing hardware-based failure recovery management resources via a hardware-based failure recovery management engine that supports hardware-based failure recovery management in an AI backend network system. Hardware-based failure recovery can be provided for AI hardware that includes a network path associated with an NCP, a plurality of ANCs that are each multi-port controllers, an ANC sync controlled via a CCP as a composite connection. The hardware-based failure recovery management resources can include operations for detecting a link failure associated with a link and a port, disabling the port of a plurality of ports in an ANC, and generating an updated bandwidth distribution configuration for distribution workload across a plurality of ANCs including the ANC having the disabled port and the remaining operational ports.

In this way, in the event of link failure associated with a port, the hardware-based failure recovery management engine supports excluding the port from packet distribution. Packet transmission will persist via remaining operational ports and links, with bandwidth adjustments made to align with the reduced capacity, mitigating credit overflow or backpressure throughout the network path that includes a plurality of ANCs (e.g., a composite connection). These bandwidth adjustments will be executed with minimal reliance on firmware or software intervention. As such, the hardware-based failure recovery management engine and hardware-based failure recovery management resources can provide an integrated failure recovery scheme that will improve reliability of AI backend network systems.

In operation, in a first embodiment, a Network Controller Processor receives a link status indicating a link failure condition associated with a port of an artificial intelligence network interface controller (ANC), the ANC is a multi-port controller associated with a plurality of ports and corresponding links. The ANC is associated with a composite connection of a plurality of ANCs, the plurality of ANCs are associated with a bandwidth distribution configuration that allocates the plurality of ANCs corresponding ANC bandwidth weights for processing workloads. Based on the link status indicating the link failure condition, the NCP deactivates the port. The NCP generates an updated bandwidth distribution configuration associated with the plurality of ANCs. The updated bandwidth distribution configuration is based on the ANC comprising the deactivated port. The NCP causes distribution of workloads via the composite connection of the plurality ANCs based on the updated bandwidth distribution configuration.

In a second embodiment, an artificial intelligence Network-Interface Controller (ANC) communicates a link status indicating a link failure condition associated with a port. The ANC is a multi-port controller associated with a plurality of ports and corresponding links. The ANC is associated with a composite connection of a plurality of ANCs, the plurality of ANCs are associated with a bandwidth distribution configuration that allocates the plurality of ANCs corresponding ANC bandwidth weights for processing workloads. Communicating the link status indicating the link failure condition causes deactivation of the port and generation of an updated bandwidth distribution configuration associated with the plurality of ANCs. Based on the updated bandwidth distribution configuration, the ANC receives a workload; and the ANC processes the workload using operational ports of the plurality of ports.

In a third embodiment, an artificial intelligence hardware is provided. The AI hardware includes an AI Network Interface Controller (ANC), the ANC is a multi-port controller operationally coupled to a plurality of ports and corresponding links. The ANC is associated with a composite connection of a plurality of ANCs, the plurality of ANCs are associated with a bandwidth distribution configuration that allocates the plurality of ANCs corresponding ANC bandwidth weights for processing workloads. The AI hardware further includes a Network Controller Processor (NCP) communicatively coupled to the plurality of ANCs. The NCP is configured to cause deactivation of a port associated with an ANC in the plurality of ANCs and generation of an updated bandwidth distribution configuration based on reconfiguring ANC bandwidth weights for processing workloads.

### BRIEF DESCRIPTION OF THE DRAWING

The technology described herein is described in detail below with reference to the attached drawing figures, wherein:
FIG. 1 is a block diagram of an exemplary AI backend network system including a hardware-based failure recovery management engine, in accordance with aspects of the technology described herein;
FIG. 2 is a block diagram of an exemplary AI backend network system including a hardware-based failure recovery management engine, in accordance with aspects of the technology described herein;
FIG. 3 provides a first exemplary method of providing hardware-based failure recovery management using a hardware-based failure recovery management engine, in accordance with aspects of the technology described herein;
FIG. 4 provides a second exemplary method of providing hardware-based failure recovery management using a hardware-based failure recovery management engine, in accordance with aspects of the technology described herein;
FIG. 5 provides a third exemplary method of providing hardware-based failure recovery management using a hardware-based failure recovery management engine, in accordance with aspects of the technology described herein;
FIG. 6 provides a block diagram of an exemplary AI backend network system suitable for use in implementing aspects of the technology described herein;
FIG. 7 provides a block diagram of an exemplary distributed computing environment suitable for use in implementing aspects of the technology described herein; and
FIG. 8 provides a block diagram of an exemplary computing environment suitable for use in implementing aspects of the technology described herein.

### DETAILED DESCRIPTION OF THE INVENTION

### OVERVIEW

In designing artificial intelligence (AI) supercomputers, the integration of numerous AI accelerators and AI System on Chip ("SoCs") (collectively "AI hardware") interconnected to efficiently execute AI workloads (both Inference and Training) is important. AI supercomputers are evolving to encompass unprecedented scales, potentially comprising hundreds of thousands of AI hardware interconnected via a sophisticated network infrastructure, often referred to as the backend network.

One of the central challenges encountered in the construction of such systems is ensuring reliability. The sheer magnitude of components and cables employed at this scale introduces an increased susceptibility to random failures. These failures, occurring throughout the network, require manual intervention for resolution, which entails halting ongoing operations, transferring tasks to operational nodes, and subsequently restarting them. Consequently, this process incurs substantial operational costs and undermines the overall Total Cost of Ownership (TCO) and performance of the system.

Conventional AI backend network systems are not configured with logic and infrastructure for adequate and efficient failure recovery management for AI hardware. The scale and complexity of these AI backend network systems amplify the likelihood of component failures, ranging from individual AI accelerators or AI SoCs to the cables and switches that comprise the AI backend network system. The intricate nature of these failures necessitates manual intervention for diagnosis and repair, which not only disrupts ongoing operations but also introduces significant overhead in terms of operational expenses and system downtime. Moreover, the implications of reliability extend beyond mere maintenance efforts. The interruptions caused by these failures can lead to substantial productivity losses, especially in scenarios where critical AI tasks are time-sensitive or require uninterrupted processing. Additionally, the need to redistribute workloads among functioning nodes introduces inefficiencies and can potentially bottleneck system performance.

Software-based solutions for networking failures, while flexible and versatile, have several limitations that can impact performance, reliability, and security. They introduce performance overhead by consuming CPU resources and adding latency, depend heavily on the stability and specific implementation of the operating system, and lack the fine-grained control over hardware components that hardware-based solutions possess. These solutions can be complex to configure and maintain, requiring regular updates and expertise. Additionally, they may have a limited scope of recovery, struggling with specific types of failures or scalability issues in large environments. Consequently, while they offer advantages in flexibility and deployment, their limitations necessitate consideration of hardware-based solutions for robust and efficient failure recovery in critical applications. As such, the hardware-based failure recovery management system and hardware-based failure recovery management resources can provide an integrated failure recovery scheme that will improve reliability of AI backend network systems.

Embodiments of the present technical solution are directed to systems, methods, and devices for, among other things, providing hardware-based failure recovery management using a hardware-based failure recovery management engine of an artificial intelligence (AI) backend network system. Hardware-based failure recovery management can refer to hardware-based techniques associated with AI hardware (e.g., an AI accelerator or AI System on Chip "SoC"), where the techniques and mechanisms are employed to address malfunctions or breakdowns in components that facilitate the connectivity and communication between AI hardware and other components. The AI hardware can include a Network Controller Processor (NCP) that manages communication operations of the AI hardware, an AI Network-Interface Controller (ANC) that is a multi-port controller, an ANC sync that is a composite connection of multiple ANCs that operate together, and a Composite Connection Processor (CCP) that manages the ANC sync. The hardware-based failure recovery management engine supports detecting, mitigating, and recovering from failures in the ports and/or links in AI hardware. In particular, the hardware-based failure recovery management engine supports disabling a port of a plurality of ports in an ANC in AI hardware, and generating an updated bandwidth distribution configuration for distributing workloads across a plurality of ANCs including the ANC associated with the disabled port and the remaining operational ports.

At a high level, hardware-based failure recovery can be provided for a hardware-based failure recovery management engine associated with an AI hardware (e.g., AI accelerator or AI SoC). An AI accelerator is a specialized hardware component designed to enhance the performance of artificial intelligence (AI) tasks. AI accelerators are optimized for handling the computations and algorithms involved in AI and machine learning tasks more efficiently than traditional central processing units (CPUs) or graphics processing units (GPUs). An AI SoC is a specialized integrated circuit (IC) or chip designed specifically to perform AI tasks directly on the hardware level. While both AI SoCs and AI accelerators are designed to enhance AI processing capabilities, AI SoCs may offer broader, system-level solution suitable for a wide range of applications, integrating multiple components to handle both general and AI-specific tasks. AI accelerators, on the other hand, can be specialized components focused solely on boosting AI performance, often used in conjunction with other system components to offload and accelerate AI workloads.

The AI hardware can include a plurality of ANCs. An ANC manages and facilitates network communication between the AI hardware and other devices or systems. The ANC handles data packets, manages network protocols, and ensures efficient and reliable data transfer to support various function of the AI hardware. The ANC can specifically be a multi-port controller that supports different multi-port modes (e.g., 2 port mode or 4 port modes). The ports can support different data rates, and specifically different data rates in different modes. For example, 2 port mode can include 2 200G ports and 4 port mode can include 4 100G ports. Other variations and combinations of multi-port configurations are contemplated.

Each port is associated with a link to facilitate data transfer in the AI hardware. A port serves as a physical or logical interface through which data enters or exits the AI hardware, encompassing various types such as input/output (I/O) ports, memory ports, or specialized connections to peripherals. The link denotes the communication pathway established between two ports, whether physical connections like wires or logical connections via on-chip communication protocols. Together, ports and links enable the seamless transmission of data into, out of, or between the AI hardware, facilitating coordinated operation and data exchange between different components or modules.

The AI hardware is designed with a port, serving as an interface to connect within the AI hardware or with external devices or networks, and a link representing the established connection. The link encompasses the physical connection (cables, connectors) as well as the logical communication pathway. Port failure could arise from various factors including physical damage caused by mishandling or environmental factors like moisture, heat, or dust, electrical degradation over time, manufacturing defects, or corrosion in humid or corrosive environments. Similarly, link failure might result from cable damage due to bending or wear, electromagnetic interference from nearby devices, protocol incompatibility, or network congestion. A port failure also results in a link failure.

In the event of either port or link failure, the AI hardware employs internal diagnostics to promptly detect the issue and communicates a link status indicating a link failure through error messages. For example, the AI hardware may determine port or link failure via an ANC. The determination of link or port failure can be managed by built-in self-test (BIST) mechanisms and internal monitoring circuits. These BIST functionalities, inherent to the AI hardware design, autonomously execute diagnostic routines during, systematically probing the integrity of internal links and ports. By sending test signals and scrutinizing responses, deviations from expected behavior, such as abnormal signal propagation delays or error rates, are swiftly identified as potential indicators of failure. Additionally, dedicated internal monitoring circuits continuously oversee the status of these interconnects, discerning anomalies such as signal attenuation or loss of integrity.

In one embodiment, the ANC monitoring circuits that continuously monitor the status of internal links and ports. These circuits can detect anomalies such as signal attenuation, excessive noise, or loss of signal integrity, which may signify potential failures. Upon detecting a port or link failure, the ANC communicate a link status indicating a link failure condition with an associated port. In another embodiment, a link failure detection circuit can report the status of a link. By way of illustration, a link is associated with a link failure detection circuit that is an electronic circuit designed to monitor the status of a communication link and detect potential failures or abnormalities. The link failure detection circuit may include specialized electronic components such as sensor circuits, comparators, logic gates, and flip-flops. These components monitor the parameters of communication links, compare them against predefined thresholds, and generate output signals indicating the link status. Register bits store this information within the control registers. The link detection circuit operates with register bits and monitors and manages the status of communication links within the using register bits as indicators or flags. The link failure detection circuit continuously monitors the performance and activity of individual links, updating corresponding register bits to reflect their status. These register bits act as indicators of link health, signaling whether a link is active, idle, or experiencing errors. Register bits, within hardware registers, store and manage essential data and control information that dictate the behaviors of the ANC and NCP.

In the event of a port or link failure, the hardware-based failure recovery management engine excludes the associated port from packet distribution. Packet transmission will persist via the remaining operational ports and links, with bandwidth adjustments (e.g., updates to bandwidth distribution configuration via the NCP) made to align with the reduced capacity, mitigating credit overflow or backpressure throughout the network path associated with a composite connection (i.e., ANC sync). These bandwidth adjustments will be executed with minimal reliance on firmware or software intervention.

By way of illustration, the hardware-based recovery management engine can be associated with a plurality of ANCs. Each ANC can be operationally coupled to a port and a link. For example, 4 100G ports for each corresponding link that is a serial link running at 100G speed. An ANC can be configured as a part of a composite connection or ANC sync that includes a plurality of ANCs. The composite connection can be multiple ANCs managed via a single logical interface. This technique is employed to enhance networking performance, provide redundancy, and ensure fault tolerance. The composite connection allows multiple ANCs to work together, creating a more resilient and higher-capacity network connection. The sync or synchronization of the ANC sync may refer to the synchronization process that ensures multiple ANCs work together seamlessly as a single logical connection. The synchronization enables maintaining data consistency, proper load balancing, and effective failover mechanisms across the aggregated links.

The ANC sync and/or composite connection are managed via a Composite Connection Processor (CCP). The CCP operates as a specialized component or subsystem in the AI hardware that manages and optimizes composite connections. Composite connections involve the aggregation of ANCs to function as a single, logical connection, providing increased bandwidth, redundancy, and load balancing. The CCP operates based on a bandwidth distribution configuration that is an allocation and/or limits of bandwidth for each ANC and/or port. For example, each ANC is assigned an ANC bandwidth weight. The CCP distributes packets to the plurality of ANCs based on corresponding ANC bandwidth weights in the bandwidth distribution configuration. The bandwidth distribution configuration can include a weight attribute that assigns an ANC bandwidth weight to each of the ANCs, such that, the workloads are processed at the ANC based on the corresponding assigned ANC bandwidth weight.

The ANC and CCP can operate based on corresponding load balancers. A load balancer distributes incoming network traffic across resources (i.e., ports or ANCs) to ensure no single resource becomes overwhelmed. This helps optimize resource use, improve response times, and enhance the reliability and availability of a networking functionality. Each ANC can include a local load balancer with a load balancing logic. The local load balancer supports even distribution of packets across the ports (e.g., 4 ports or 3 operational ports and bypassing one deactivated port) of the ANC. The local load balancer automatically stops communicating packets on a deactivated port and link (e.g., if port 0 of ports 0, 1, 2, 3, and 4 is down, the ANC communicates packets only to ports 1, 2 and 3). The CCP implements an ANC sync load balancer with a load balancing (or sharding) logic - based on bandwidth distribution configuration- as discussed in more detail below.

The NCP operates as a centralized component to manage the hardware-based failure recovery engine for the AI hardware. The NCP can employ network interface firmware to provide hardware-based failure recovery management functionality. The firmware provides low-level control and operational functionality providing hardware-based failure recovery. The NCP receives the statuses of links (i.e., link status) from the ANC. The ANC can communicate link failure condition in a link using an interrupt (e.g., a signal from the ANC to the NCP) to the NCP. In some embodiments, NCP can implement a lightweight code that supports confirming the link failure condition compared to a transient glitch. Transient glitches are brief, temporary disruptions in caused by various factors such as electromagnetic interference, power supply variations, and physical disturbances. Confirming a transient glitch involves a systematic approach that includes real-time monitoring, data analysis, and the use of diagnostic tools. For example, tracking performance metrics like latency, packet loss, and error rates; or comparing current performance data with historical trends. As such, a determination is made that the link failure is not associated with a transient glitch prior to proceed with hardware-based failure recovery operations.

Upon confirming the link failure, the NCP disables (i.e., deactivates) a port associated with the link failure at an ANC. The NCP then generates an updated bandwidth distribution configuration associated with the plurality of ANCs in the ANC sync for composite connections. The updated bandwidth distribution configuration is based on reconfigured weights (i.e., ANC bandwidth weights) for the ANCs. As previously mentioned, the CCP load balances based on the bandwidth distribution configuration. In particular, the NCP by changing the weights of the ANCs and communicating the updated bandwidth distribution configuration, load balancing (or sharding) logic in the ANC sync - via the CCP - ensures fair distribution of bandwidth among the plurality of ANCs. For example, scaling back an ANC bandwidth weight adjustment can be in proportional manner to avoid any flow control/build up between the ANC sync and any of the ANCs (e.g., an ANC with a port associated with a link failure).

By way of illustration, every ANC may initially have a weight of 4 - one for each port - and upon failure of a port in an ANC, an ANC sync load balancer will use ¾ of the workload to the ANC with weight 3 compare to ANCs with weight 4. The updated bandwidth distribution configuration indicates ANC bandwidth weight adjustments. ANC bandwidth adjustments can be signaled to the ANC sync via hardware-based side band signaling between the ANC and the ANC sync. Side band signaling can be performed in scenario where NCP resources are limited. The side band signaling refers to using a separate, auxiliary, or distinct communication channel between the ANC and the ANC sync. In this way, a composite connection configured via the CCP can continue to operate reliably in case of a single or multiple link failure at a single or multiple ANCs in the AI hardware - without requiring manual intervention or interruption of workloads.

Advantageously, the embodiments of the present technical solution include several inventive features (e.g., operations, systems, engines, and components) associated with a hardware-based failure recovery engine in an AI backend network system. Hardware-based failure recovery can be provided for AI hardware that includes a network path associated with an NCP, a plurality of ANCs that are each multi-port controllers, an ANC sync controlled via a CCP as a composite connection. The hardware-based failure recovery management resources can include operations for detecting a link failure associated with a link and a port, disabling the port of a plurality of ports in an ANC, and generating an updated bandwidth distribution configuration for distribution workload across a plurality of ANCs including the ANC having the disabled port and the remaining operational ports. The hardware-based failure recovery management engine and hardware-based failure recovery management resources can provide an integrated failure recovery scheme that will improve reliability of AI backend network systems.

### EXAMPLE SYSTEMS AND RESOURCES

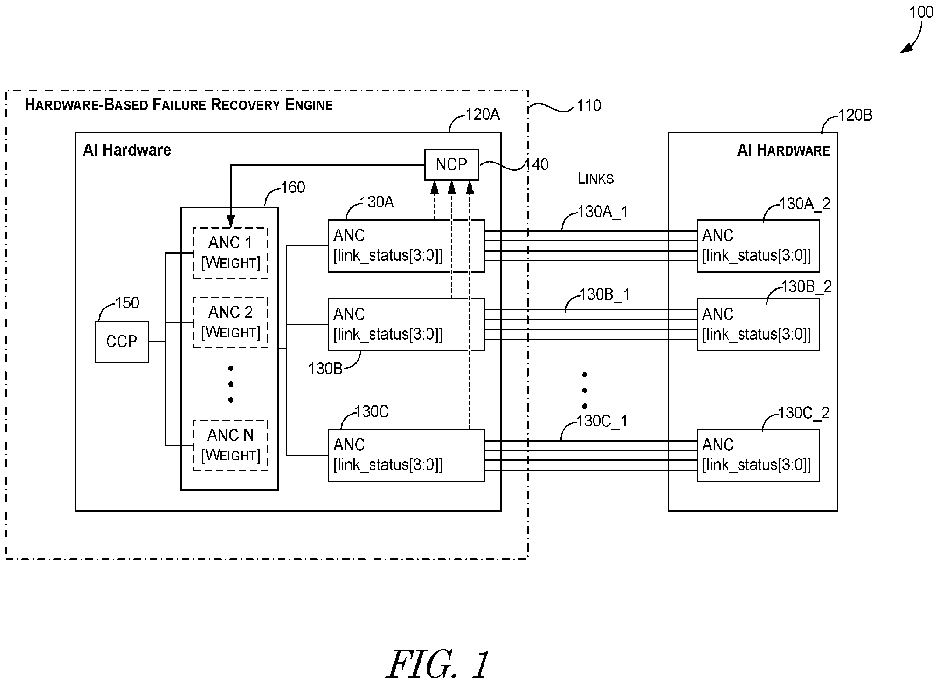

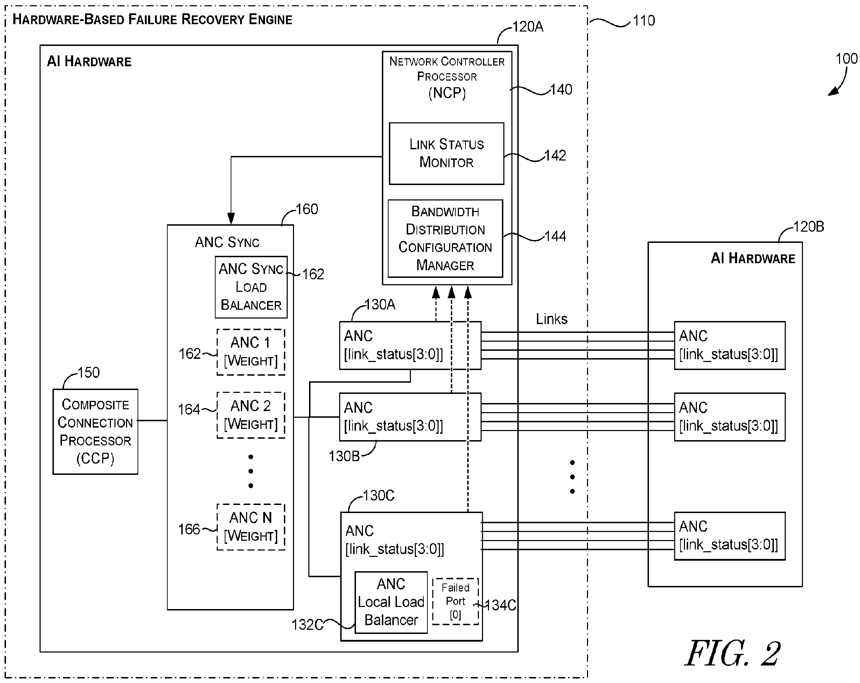

Aspects of the technical solution can be described by way of examples and with reference to FIGS. 1 and 2. FIG. 1 illustrates a AI backend network system 100 with hardware management engine 110, AI hardware 120 (AI hardware 120A, AI hardware 120B), a plurality of ANCs (ANC 130A, ANC 130B, ANC 130C, ANC 130A_2, ANC 130B_2, 130C_2), link sets (e.g., sets of 4: link 130A_1, link 130B_1, and link 130C_1), Network Controller Processor (NCP) 140, Composite Connection Processor (CCP) 150, and ANC sync 160.

With reference to FIG. 1, FIG. 1 illustrates AI backend network system 100 that is an operating environment for AI hardware 120 (AI hardware 120A and AI hardware 120B). The AI hardware 120 can include an NCP 140 that manages communication operations of the AI hardware 120, ANCs that are multi-port controllers, ANC sync 160 that is a composite connection of multiple ANCs that operate together, and CCP 150 that manages the ANC sync. The plurality of ANCs can be associated with AI hardware 120A (i.e., ANC 130A, ANC 130B, and ANC 130C) and AI hardware 120B (i.e., ANC 130A_2, ANC 130B_2, 130C_2) communicating via links (e.g., link 130A_1, link 130B_1, and link 130C_1). The hardware-based failure recovery management engine 110 supports detecting, mitigating, and recovering from failures in the ports and links in AI hardware. In particular, the hardware-based failure recovery management engine 110 supports disabling a port of a plurality of ports in an ANC in AI hardware, and generating an updated bandwidth distribution configuration for distributing workloads across a plurality of ANCs including the ANC associated with the disabled port and the remaining operational ports.

With reference to FIG. 2, FIG. 2 illustrates the AI backend network system 100 with additional components that facilitate providing hardware-based failure recovery functionality. The hardware-based failure recovery engine 110 ensures continuous and reliable operation by detecting, diagnosing, and mitigating network failures efficiently. The hardware-based failure recovery engine 110 uses the NCP 140 to manage hardware-based failure recovery engine resources. In operation, the NCP 140 receives a link status indicating a link failure condition associated with a port (e.g., port 134C) of ANC 130C. It is contemplated that the link failure generated because of a failed port. The ANC 130C is a multi-port controller associated with a plurality ports (e.g., port 0, 1, 2, and 3). The ANC 130 supports two or more multi-port modes (e.g., 2 ports at 200G or 4 ports at 100G). The ANC 130C is associated with a composite connection (e.g., ANC sync 160) of a plurality of ANCs (e.g., ANC 1 162 and ANC 2 164... ANC N 166). While the illustrations depict the ANCs linked to the ANC sync via a shared connection, it contemplated that different types of configurations are feasible. For instance, each ANC might feature its own dedicated connection to the ANC sync. Alternatively, at least one ANC could possess an independent connection to the ANC sync, with the other ANCs having a shared connection. The plurality of ANCs are associated with a bandwidth distribution configuration that allocates the plurality of ANCs corresponding ANC bandwidth weights for processing workloads. The link status is based on an interrupt triggered by the ANC, the link status is associated with a link failure detection circuit and a register bit of a corresponding link of the port. The NCP 140 (e.g., link status monitor 142) uses a lightweight code to confirm link failure condition is not based on a transient glitch.

Based on the link status indicating the link failure condition, the NCP 140 deactivates the port 134C. The NCP 140 (e.g., bandwidth distribution configuration manager 144) generates an updated bandwidth distribution configuration associated with the ANC sync 160. In some embodiments, generating the updated bandwidth distribution comprises scaling back an ANC bandwidth weight of the ANC proportionally to a number of deactivated ports to prevent any flow control issues or build-up between an ANC sync of the composite connection and the plurality of ANCs. Other adjustment variations are contemplated (e.g., fixed-step adjustment, threshold-based adjustment, priority-based adjustment, algorithmic adjustment). The updated bandwidth distribution configuration is based on the ANC 130C comprising the port 134C. The NCP 140 causes distribution of workloads via the composite connection of the plurality ANCs based on the updated bandwidth distribution configuration. The NCP 140 communicates the updated bandwidth distribution configuration to cause reconfiguration the ANC bandwidth weights of the plurality of ANC. It is contemplated the ANC 130C can receive the ANC bandwidth weight from the NCP and signal an ANC bandwidth weight adjustment using hardware-based side band signaling between the ANC and the composite connection.

The NCP 140 causes distribution of workloads via the composite connection of the plurality ANCs based on the updated bandwidth distribution configuration. Causing distribution of workloads via the composite connection of the plurality ANCs is based on the updated bandwidth distribution configuration is based on CCP 150 using the ANC bandwidth weights in load balancing logic (e.g., ANC sync load balancer 162) for assigning workloads to the plurality of ANCs. The ANC 130C receives a workload via the CCP 150 and the ANC sync 160. Receiving the workload is based on the CCP using the ANC bandwidth weight of the ANC. The ANC 130C uses a local load balancer (e.g., ANC local load balancer 132C) to distribute the workload to the operational ports in the plurality of ports.

### EXAMPLE METHODS

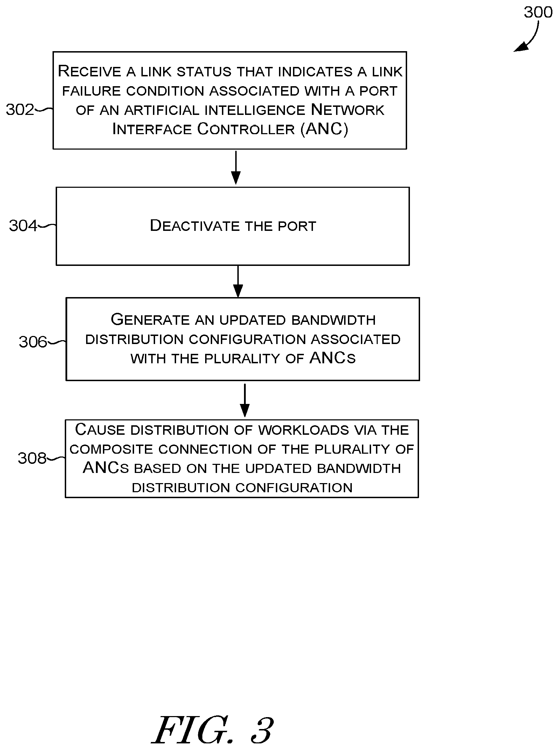

With reference to FIGS. 3, 4, and 5, flow diagrams are provided illustrating methods for providing hardware-based failure recovery management using a hardware-based failure recovery management engine of an artificial intelligence (AI) backend network system. The methods may be performed using the AI backend network system described herein. In embodiments, one or more computer-storage media having computer-executable or computer-useable instructions embodied thereon that, when executed, by one or more processors can cause the one or more processors to perform the methods (e.g., computer-implemented method) in the cloud access management system (e.g., a computerized system).

Turning to FIG. 3, a flow diagram is provided that illustrates a method 300 for providing hardware-based failure recovery management using a hardware-based failure recovery management engine of an AI backend network system. At block 302, receive a link status indicating a link failure condition associated with a port of an AI Network Interface Controller. The ANC is associated with a composite connection of a plurality of ANCs. The plurality of ANCs are associated with a bandwidth distribution configuration that allocates the plurality of ANCs corresponding ANC bandwidth weights for processing workloads. At block 304, based on the link status indicating the link failure condition, deactivate the port. At block 306, generate an updated bandwidth distribution configuration associated with the plurality of ANCs. The updated bandwidth distribution configuration is based on the ANC associated with the port. At block 308, cause distribution of workloads via the composite connection of the plurality of ANCs based on the updated bandwidth distribution configuration.

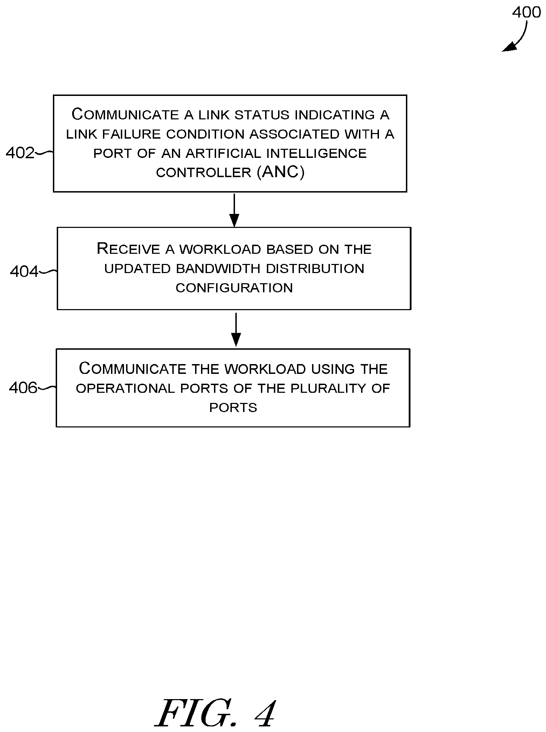

Turning to FIG. 4, a flow diagram is provided that illustrates a method 400 for providing hardware-based failure recovery management using a hardware-based failure recovery management engine of an AI backend network system. At block 402, communicate a link status indicating a link failure condition associated with a port of an ANC. The ANC is a multi-port controller associated with a plurality of ports and corresponding links. The ANC is associated with a composite connection of a plurality of ANCs. The plurality of ANCs are associated with a bandwidth distribution configuration that allocates the plurality of ANCs corresponding ANC bandwidth weights for processing workloads. Communicating the link status indicating the link failure condition causes deactivation of the port and generation of an updated bandwidth distribution configuration associated with the plurality of ANCs. At block 404, receive a workload based on the updated bandwidth distribution configuration. At block 406, communicate the workload using the operational ports of the plurality of ports.

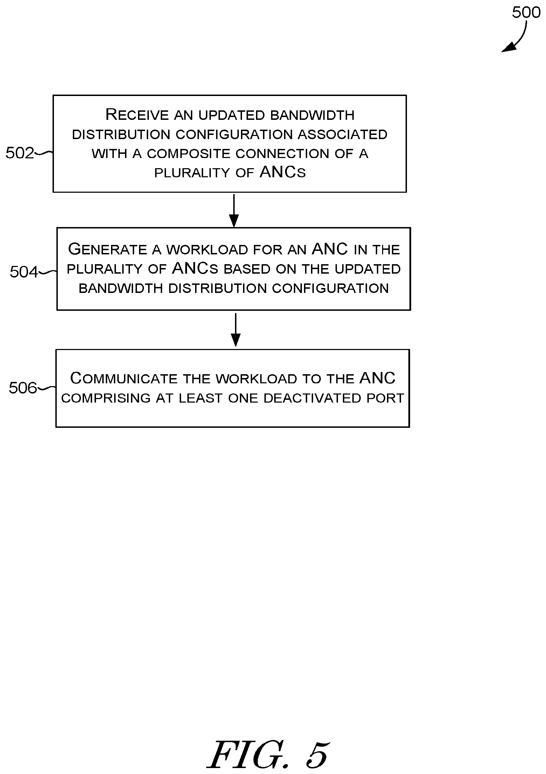

Turning to FIG. 5, a flow diagram is provided that illustrates a method 500 for providing hardware-based failure recovery management using a hardware-based failure recovery management engine of an AI backend network system. At block 502, receive an updated bandwidth distribution configuration associated with a composite connection of a plurality of ANCs. The plurality of ANCs are associated with the updated bandwidth distribution configuration that allocates the plurality of ANCs corresponding ANC bandwidth weights for processing workloads. At block 504, generate a workload for an ANC in the plurality of ANCs based on the updated bandwidth distribution configuration. At block 506, communicate a workload to the ANC comprising at least one deactivated port. The ANC is a multi-port controller associated with a plurality of ports and corresponding links.

### TECHNICAL IMPROVEMENT

Embodiments of the present techniques have been described with reference to several inventive features (e.g., operations, systems, engines, and components) associated with a cloud access management system. Inventive features described include: operations, interfaces, data structures, and arrangements of computing resources associated with providing the functionality described herein relative with reference to a hardware-based failure recovery engine. Functionality of the embodiments of the present invention have further been described, by way of an implementation and anecdotal examples - to demonstrate that the operations for providing the connection management engine as a solution to a specific problem in failure recovery management technology to improve computing operations in AI backend network systems.

By way of illustration, the hardware-based failure recovery can be provided for AI hardware that includes a network path associated with an NCP, a plurality of ANCs that are each multi-port controllers, an ANC sync controlled via a CCP as a composite connection. The hardware-based failure recovery management resources can include operations for detecting a link failure associated with a link and a port, disabling the port of a plurality of ports in an ANC, and generating an updated bandwidth distribution configuration for distribution workload across a plurality of ANCs including the ANC having the disabled port and the remaining operational ports. The hardware-based failure recovery management engine and hardware-based failure recovery management resources can provide an integrated failure recovery scheme that will improve reliability of AI backend network systems.

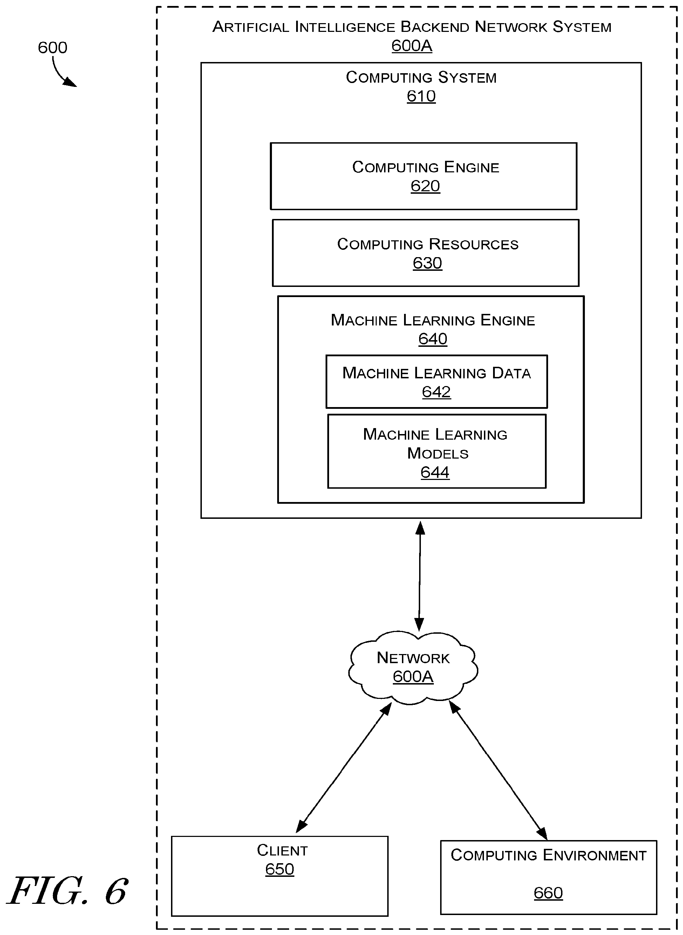

Aspects of the technical solution have been described by way of examples and with reference to FIGS. 1 and 2. FIG. 1 is a block diagram of an exemplary technical solution environment, based on example environments described with reference to FIGS. 6, 7 and 8 for use in implementing embodiments of the technical solution are shown. Generally the technical solution environment includes a technical solution system suitable for providing the example AI backend network system 100 in which methods of the present disclosure may be employed. In particular, FIG 1 illustrates a high level architecture of the AI backend network system 100 in accordance with implementations of the present disclosure, among other engines, managers, generators, selectors, or components not shown (collectively referred to herein as "components").

### ADDITIONAL SUPPORT FOR DETAILED DESCRIPTION OF THE INVENTION

### EXAMPLE COMPUTING SYSTEM IN A COMPUTING ENVIRONMENT

Referring now to FIG. 6, FIG. 6 illustrates a computing environment in which implementations of the present disclosure may be employed. In particular, FIG. 6 shows a high level architecture of an example cloud computing platform 600, artificial intelligence (AI) backend network system 600A, and computing system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing platform 600 provides computing system resources for different types of managed computing environments. For example, the cloud computing platform supports delivery of computing services - including compute, servers, storage, databases, networking, and intelligence. The components of cloud computing environment 600 may communicate with each other over a network 600A which may include, without limitation, one or more local area networks (LANs) and/or wide area networks (WANs).

The AI backend network system 600A provides a specialized infrastructure designed to support the computational demands of artificial intelligence (AI) workloads, including both training and inference tasks. The AI backend network systems 600A consists of interconnected components that facilitate the efficient processing, communication, and management of data into, out of, or between a distributed computing environment. Operations include data processing, handling input data, intermediate results, and output data, alongside complex computations for AI tasks, communication facilitating seamless interaction among components, and resource management overseeing optimal utilization of compute nodes, accelerators (e.g., GPUs, TPUs), memory, and storage. Interfaces encompass network interfaces enabling high-speed communication between nodes, APIs providing standardized interaction methods for developers, and management interfaces for system monitoring and administration. Data support functionalities include storage, data movement, transformation, and replication with backup mechanisms, ensuring data durability and reliability. In this way, the AI backend network system serves as the backbone infrastructure for AI workloads, facilitating efficient and scalable AI processing across distributed computing environments through its comprehensive operations, interfaces, and data management functionalities.

The cloud computing platform 600 provides the foundational infrastructure and resources for deploying and managing computing workloads, including AI. AI backend network system 600A includes specialized infrastructures tailored for supporting the unique computational demands of AI workloads. The relationship between the two involves resource provisioning, integration, orchestration, and data processing, enabling organizations to leverage cloud-based resources effectively for AI development and deployment.

The computing system 610 provides computing functionality for computing environments. For example, the computing system 610 is a platform or framework that leverages advanced technologies such as artificial intelligence (AI), machine learning (ML), data mining, and big data analytics to extract actionable insights and knowledge from large and complex datasets. In this way, the computing system 610 provides a computing environment that enables organizations to make informed decisions and optimize operations.

The computing system 610 includes a computing engine 620 that is a computing environment that supports executing computational tasks associated with the computing system 610. The computing engine 620 can be a hardware or software component that performs computational operations, such as, mathematical calculations, data processing, and algorithm execution. The computing system 610 integrates computing resources 630 into computing system 610 to effectively provide computing functionality in a computing environment.

The computing resources 630 refer to computing elements (e.g., components, capability, or entities) that collectively enable the computing engine 620 operations. The computing resources 630 encompass a spectrum of computing elements, beginning with the diverse operations the computing resources 630 can perform, ranging from complex computations to data manipulations. Interfaces, an integral part of the computing resources 630, provide the means for both user interaction and seamless integration with external systems, ensuring a dynamic and interactive computing experience. The data facet of the data computing resources 630 involves various types: input data, which is the information provided for processing; processing data, representing the data manipulated during computational tasks; and output data, the results generated by the computing engine 620. In this way, the computing resources 630 support the broader computing engine 620 and computing system 610.

Machine learning engine 640 is a machine learning framework or library that operates as a tool for providing infrastructure, algorithms, capabilities for designing, training, and deploying machine learning models. The machine learning engine 640 can include pre-built functions and APIs that enable building and applying machine learning techniques. The machine learning engine 640 can provide a machine learning workflow from data processing and feature extraction to model training, evaluation, and deployment.

Machine learning data 642 refers to the structured or unstructured information used to train, validate, and test machine learning models. This machine learning data 642 typically comprises input features (also known as independent variables or predictors) and their corresponding target values (also known as dependent variables or labels). Machine learning data 642 can come from various sources, such as databases, sensor readings, text documents, images, audio recordings, or streaming data sources. Machine learning data 642 may require preprocessing, cleaning, and transformation to ensure its suitability for training machine learning models. Additionally, machine learning data 642 is often divided into training, validation, and testing sets to assess the performance and generalization ability of trained models accurately.

Machine learning models 644 are algorithms or mathematical representations that learn patterns and relationships from the provided data to make predictions or decisions without being explicitly programmed. Machine learning models 644 models are trained using the machine learning data 642, where they iteratively adjust their internal parameters or coefficients to minimize prediction errors or maximize performance metrics. Machine learning models 644 can be classified into various types based on their learning algorithms and the nature of the problem they address, including supervised learning models (e.g., regression, classification), unsupervised learning models (e.g., clustering, dimensionality reduction), and reinforcement learning models. Once trained, machine learning models 644 can be deployed in production environments to make predictions on new, unseen data instances. Regular evaluation and monitoring of model performance are essential to ensure their accuracy, reliability, and effectiveness in real-world applications.

The computing client 650 supports access to computing system 610. The computing client 650 can be provided as a user client or an administrator client to support user and administrator functionality associated with the computing environment 660, computing engine 620, or computing system 610. The computing client 650 can also support accessing computing visualizations and causing display of the computing visualization. The computing client 650 can include a computing engine client that supports receiving computing information associated computing engine 620 output from the computing system 610 and causing presentation of the computing information. The computing information can specifically include computing visualizations associated with the computing engine 620 output.

Computing environment 660 is a computing environment that is integrated into the computing system 610. The computing environment 660 is characterized by an infrastructure, where data from various sources within the ecosystem, including servers, networks, applications, sensors, and user interactions, can be aggregated and processed by the computing system 610 to perform computing tasks. The computing environment 660 can be associated with middleware and integration layers facilitate seamless data flow, while computing infrastructure, encompassing cloud-based resources, distributed computing frameworks, and optimized storage systems, supports functionality associated with the computing.

### EXAMPLE DISTRIBUTED COMPUTING SYSTEM ENVIRONMENT

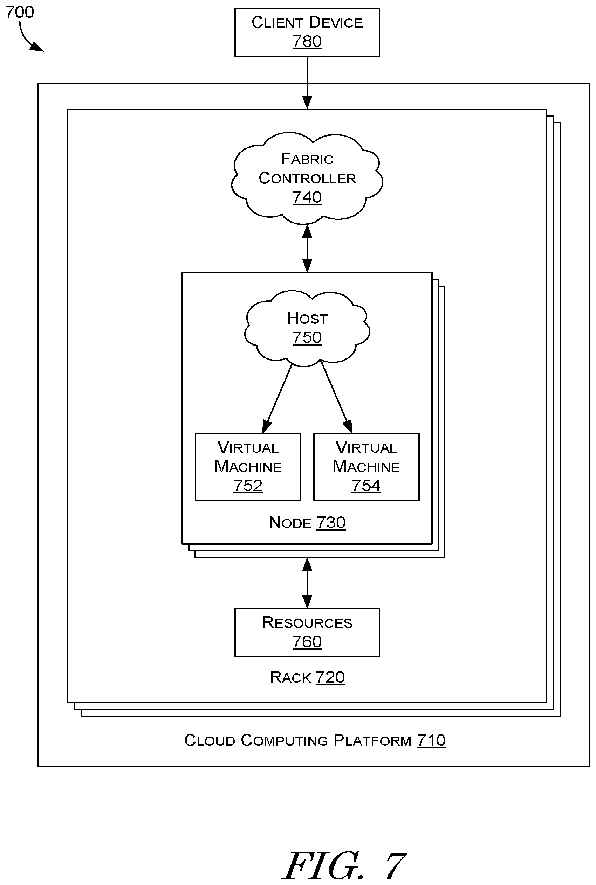

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 780 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### EXAMPLE COMPUTING ENVIRONMENT

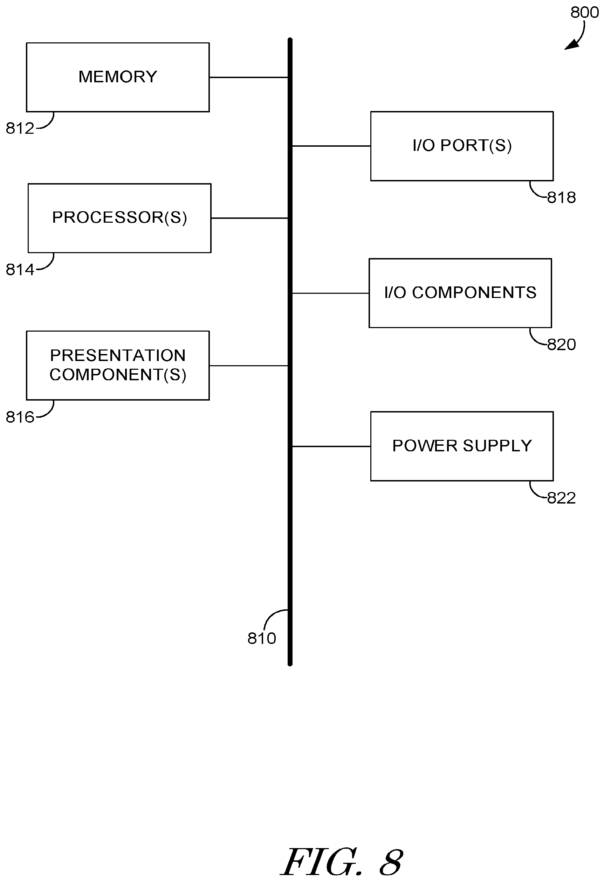

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### ADDITIONAL STRUCTURAL AND FUNCTIONAL FEATURES

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

Alternatively or in addition to the other examples described herein, examples include any combination of the following clauses:
Clause A. A method, the method comprising: receiving a link status indicating a link failure condition with an associated port of an artificial intelligence Network Interface Controller (ANC), the ANC is a multi-port controller associated with a plurality of ports and corresponding links; wherein the ANC is associated with a composite connection of a plurality of ANCs, the plurality of ANCs are associated with a bandwidth distribution configuration that allocates the plurality of ANCs corresponding ANC bandwidth weights for processing workloads; based on the link status indicating the link failure condition, deactivating the associated port; generating an updated bandwidth distribution configuration associated with the plurality of ANCs, wherein the updated bandwidth distribution configuration is based on the ANC comprising the deactivated associated port; and
   causing distribution of workloads via the composite connection of the plurality ANCs based on the updated bandwidth distribution configuration.
Clause B. The method of clause A, wherein the ANC supports two or more multi-port modes.
Clause C. The method of clause A or clause B, wherein the link status is based on an interrupt triggered by the ANC, the link status is associated with a link failure detection circuit and a register bit of a corresponding link of the associated port.
Clause D. The method of any preceding clause, the method further comprising using a lightweight code to confirm link failure condition is not based on a transient glitch.
Clause E. The method of any preceding clause, wherein generating the updated bandwidth distribution comprises scaling back an ANC bandwidth weight of the ANC proportionally to a number of deactivated ports to prevent any flow control issues or build-up between an ANC sync of the composite connection and the plurality of ANCs.
Clause F. The method of any preceding clause, the method further comprising communicating the updated bandwidth distribution configuration to cause reconfiguration the ANC bandwidth weights of the plurality of ANCs.
Clause G. The method of any preceding clause, wherein causing distribution of workloads via the composite connection of the plurality ANCs is based on the updated bandwidth distribution configuration is based on a Composite Connection Processing (CCP) using the ANC bandwidth weights in load balancing logic for assigning workloads to the plurality of ANCs.
Clause H. The method of any preceding clause, the method further comprising receiving a workload, wherein receiving the workload is based on a Composite Connection Processing (CCP) using the ANC bandwidth weights in load balancing logic for assigning workloads to the plurality of ANCs.
Clause I. The method of any preceding clause, wherein the link failure condition is based on a failed link or a failed port, are a combination of both.
Clause J. A method, the method comprising: communicating, from an artificial intelligence network interface controller (ANC), a link status indicating a link failure condition with an associated port, the ANC is a multi-port controller associated with a plurality of ports and corresponding links, wherein the ANC is associated with a composite connection of a plurality of ANCs, the plurality of ANCs are associated with a bandwidth distribution configuration that allocates the plurality of ANCs corresponding ANC bandwidth weights for processing workloads; wherein communicating the link status indicating the link failure condition causes deactivation of the associated port and generation of an updated bandwidth distribution configuration associated with the plurality of ANCs; based on the updated bandwidth distribution configuration, receiving a workload; and using the operational ports of the plurality of ports, communicating the workload.
Clause K. The method of clause J, wherein the ANC supports two or more multi-port modes.
Clause L. The method of clause J or clause K, the method further comprising the ANC signaling an ANC bandwidth weight adjustment using hardware-based side band signaling between the ANC and the composite connection.
Clause M. The method of any of clauses J to L, wherein receiving the workload is based on a Composite Connection Processing (CCP) using the ANC bandwidth weights in load balancing logic for assigning workloads to the plurality of ANCs.
Clause N. The method of any of clauses J to L, the method further comprising the ANC using a local load balancer to distribute the workload to the operational ports in the plurality of ports.
Clause O. An artificial intelligence (AI) hardware comprising: an AI Network Interface Controller (ANC), the ANC is a multi-port controller operationally coupled to a plurality of ports and corresponding links, wherein the ANC is associated with a composite connection of a plurality of ANCs, the plurality of ANCs are associated with a bandwidth distribution configuration that allocates the plurality of ANCs corresponding ANC bandwidth weights for processing workloads; and a Network Controller Processor (NCP) communicatively coupled to the plurality of ANCs, wherein the NCP is configured to cause deactivation of a port associated with an ANC in the plurality of ANCs and generation of an updated bandwidth distribution configuration based on reconfiguring ANC bandwidth weights for processing workloads.
Clause P. The AI hardware of clause O, further comprising a link operationally coupled to a link failure detection circuit associated with a register bit for detecting link failure conditions.
Clause Q. The AI hardware of clause O or clause P, wherein the ANC is configured to communicate a link status indicating a link failure condition associated with a port to cause the deactivation of the port and generation of the updated bandwidth distribution configuration.
Clause R. The AI hardware of any of clauses O to Q, wherein generating the updated bandwidth distribution comprises scaling back an ANC bandwidth weight of the ANC proportionally to a number of deactivated ports to prevent any flow control issues or build-up between an ANC sync of the composite connection and the plurality of ANCs.
Clause S. The system of any of clauses O to R, further comprising a Composite Connection Process (CCP) that enables using the ANC bandwidth weights in load balancing logic for assigning workloads to the plurality of ANCs.
Clause T. The system of clause S, wherein the ANC further comprises a local load balancer to distribute workload to the operational ports in the plurality of ports of the ANC.

## Claims

1. A method, the method comprising:
receiving (302) a link status indicating a link failure condition with an associated port of an artificial intelligence Network Interface Controller, ANC, the ANC is a multi-port controller associated with a plurality of ports and corresponding links;
wherein the ANC is associated with a composite connection of a plurality of ANCs, the plurality of ANCs are associated with a bandwidth distribution configuration that allocates the plurality of ANCs corresponding ANC bandwidth weights for processing workloads;
based on the link status indicating the link failure condition, deactivating (304) the associated port;
generating (306) an updated bandwidth distribution configuration associated with the plurality of ANCs, wherein the updated bandwidth distribution configuration is based on the ANC comprising the deactivated associated port; and
causing (308) distribution of workloads via the composite connection of the plurality ANCs based on the updated bandwidth distribution configuration.

2. The method of claim 1, wherein the ANC supports two or more multi-port modes.

3. The method of claim 1 or claim 2, wherein the link status is based on an interrupt triggered by the ANC, the link status is associated with a link failure detection circuit and a register bit of a corresponding link of the associated port.

4. The method of any preceding claim, the method further comprising using a lightweight code to confirm link failure condition is not based on a transient glitch.

5. The method of any preceding claim, wherein generating the updated bandwidth distribution comprises scaling back an ANC bandwidth weight of the ANC proportionally to a number of deactivated ports to prevent any flow control issues or build-up between an ANC sync of the composite connection and the plurality of ANCs.

6. The method of any preceding claim, the method further comprising communicating the updated bandwidth distribution configuration to cause reconfiguration the ANC bandwidth weights of the plurality of ANCs.

7. The method of any preceding claim, wherein causing distribution of workloads via the composite connection of the plurality ANCs is based on the updated bandwidth distribution configuration is based on a Composite Connection Processing, CCP, using the ANC bandwidth weights in load balancing logic for assigning workloads to the plurality of ANCs.

8. The method of any preceding claim, the method further comprising receiving a workload, wherein receiving the workload is based on a Composite Connection Processing, CCP, using the ANC bandwidth weights in load balancing logic for assigning workloads to the plurality of ANCs.

9. The method of any preceding claim, wherein the link failure condition is based on a failed link or a failed port, are a combination of both.

10. A method, the method comprising:
communicating (402), from an artificial intelligence network interface controller, ANC, a link status indicating a link failure condition with an associated port, the ANC is a multi-port controller associated with a plurality of ports and corresponding links,
wherein the ANC is associated with a composite connection of a plurality of ANCs, the plurality of ANCs are associated with a bandwidth distribution configuration that allocates the plurality of ANCs corresponding ANC bandwidth weights for processing workloads;
wherein communicating the link status indicating the link failure condition causes deactivation of the associated port and generation of an updated bandwidth distribution configuration associated with the plurality of ANCs;
based on the updated bandwidth distribution configuration, receiving (404) a workload; and using the operational ports of the plurality of ports, communicating (406) the workload.

11. The method of claim 10, the method further comprising the ANC signaling an ANC bandwidth weight adjustment using hardware-based side band signaling between the ANC and the composite connection.

12. The method of claim 10 or claim 11, the method further comprising the ANC using a local load balancer to distribute the workload to the operational ports in the plurality of ports.

13. An artificial intelligence, AI, hardware comprising:
an AI Network Interface Controller, ANC, (130C), the ANC is a multi-port controller operationally coupled to a plurality of ports and corresponding links, wherein the ANC is associated with a composite connection of a plurality of ANCs, the plurality of ANCs are associated with a bandwidth distribution configuration that allocates the plurality of ANCs corresponding ANC bandwidth weights for processing workloads; and
a Network Controller Processor, NCP, (140) communicatively coupled to the plurality of ANCs, wherein the NCP is configured to cause deactivation of a port associated with an ANC in the plurality of ANCs and generation of an updated bandwidth distribution configuration based on reconfiguring ANC bandwidth weights for processing workloads.

14. The AI hardware of claim 13, wherein the ANC is configured to communicate a link status indicating a link failure condition associated with a port to cause the deactivation of the port and generation of the updated bandwidth distribution configuration.

15. The system of claim 13 or claim 14, further comprising a Composite Connection Process, CCP, that enables using the ANC bandwidth weights in load balancing logic for assigning workloads to the plurality of ANCs.
